Europäisches Patentamt

European Patent Office

Office européen des brevets

(19)

(11) **EP 1 457 902 A1**

(12) **DEMANDE DE BREVET EUROPEEN**

(43) Date de publication:
**15.09.2004 Bulletin 2004/38**

(51) Int Cl.$^7$: **G06F 17/60**

(21) Numéro de dépôt: **03005791.3**

(22) Date de dépôt: **14.03.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(71) Demandeurs:
• **Mairie de Lyon**
**69205 Lyon Cedex 01 (FR)**
• **SCAP**
**69120 Vaulx-en-Velin (FR)**
• **POINT DE MIRE - CONSEIL EN PROPRETE**
**75017 Paris 17 (FR)**

(72) Inventeurs:
• **Coquaz, Jérôme, Joseph**
**69007 Lyon (FR)**
• **Esmard, Patrice, Jean-Louis**
**38280 Janneyrias (FR)**
• **Fillon, Jean-Pierre, André**
**69100 Villeurbanne (FR)**

(74) Mandataire: **Martin, Didier Roland Valéry**
**Cabinet Didier Martin**
**50, chemin des Verrières**
**69260 Charbonnières-les Bains (FR)**

(54) **Procédé d'optimisation de la qualité environnementale d'un lieu, système et formulaire pour sa mise en oeuvre**

(57) -Procédé d'optimisation de la qualité environnementale d'un lieu, système et formulaire pour sa mise en oeuvre.

- Procédé d'optimisation de la qualité environnementale d'un lieu susceptible d'être affligé par diverses anomalies environnementales potentielles, caractérisé en ce que ledit procédé comprend :

a) une étape de création d'un système référentiel dans laquelle on pondère d'un coefficient d'importance chaque anomalie potentielle, sur la base d'informations relatives à la perception de la qualité environnementale dudit lieu ;

b) une étape d'audit du lieu, dans laquelle :

$b_1$) on attribue à chaque anomalie une note représentative de son degré d'affliction du lieu à l'instant de l'audit ;

$b_2$) on pondère les notes par les coefficients d'importance pour obtenir des notes pondérées, et on établit au moins un indice qualité à partir des notes pondérées,

c) une étape d'action corrective, dans laquelle on agit sur le lieu à l'aide de moyens appropriés d'amélioration de la qualité environnementale, si ledit au moins un indice qualité est en dehors d'une plage de valeurs prédéterminée correspondante, représentative d'une qualité environnementale acceptable.

- Optimisation de la qualité environnementale.

EP 1 457 902 A1

# EP 1 457 902 A1

**Description**

La présente invention se rapporte au domaine technique de l'optimisation de la qualité environnementale d'un lieu, lequel peut être de toute taille et de toute nature, et par exemple urbain ou rural, public ou privé, ou encore couvert ou à ciel ouvert. L'optimisation de la qualité environnementale d'un lieu comprend par exemple des opérations de nettoyage visant à améliorer la qualité du lieu en question. La présente invention ne se limite cependant en aucun cas au seul aspect de propreté, et englobe tous les aspects participant à la qualité de vie d'un lieu, et qui peuvent être par exemple d'ordre visuel, olfactif, auditif ou encore tactile, ainsi que les moyens techniques permettant d'améliorer cette qualité environnementale globale.

L'invention concerne plus particulièrement un procédé d'optimisation de la qualité environnementale d'un lieu susceptible d'être affligé par diverses anomalies environnementales potentielles.

L'invention concerne également un système pour la mise en oeuvre de ce procédé.

L'invention concerne enfin un formulaire pour la mise en oeuvre du procédé.

La qualité de l'environnement de vie est une préoccupation majeure des citoyens.

Cette qualité est fonction de plusieurs facteurs, parmi lesquels la propreté occupe une place prépondérante. Afin de satisfaire ce besoin de propreté, les collectivités territoriales pilotent des services chargés de nettoyer les lieux publics comme par exemple les avenues, les rues, les parcs ou encore les espaces verts.

Ces services en charge de la propreté sont cependant confrontés au caractère éminemment subjectif de la notion même de propreté. Ainsi, une rue est par exemple jugée sale ou propre en fonction d'un ressenti, d'une impression, qui prend en compte des facteurs personnels variables suivant les individus. Par exemple, pour certains, les déjections canines sont jugées intolérables, tandis que d'autres sont beaucoup plus sensibles aux graffitis, ou encore à l'affichage sauvage ou aux papiers gras.

Dès lors, il est particulièrement difficile pour les services en charge de la propreté de nettoyer correctement les zones qui leur sont affectées, puisqu'ils ignorent les attentes réelles et précises des citoyens concernés par leurs actions en la matière.

Cela conduit ainsi à mettre en oeuvre des moyens techniques de nettoiement ainsi que des actions de nettoyage mal ou non adaptés, puisqu'ils ne modifient pas la qualité environnementale aux yeux des personnes fréquentant le lieu.

Ce problème est accentué par le fait que plusieurs services de propreté, ayant chacun un domaine d'activité propre, cohabitent parfois sur un même territoire. Ainsi, dans certaines collectivités territoriales, des services sont en charge de la propreté *« horizontale »*, c'est-à-dire des sols, tandis que d'autres sont en charge de la propreté *« verticale »*, c'est-à-dire des murs. Dans ce type d'organisation, au sein desquelles peuvent agir à la fois des services publics et des prestataires privés, il est primordial de coordonner les actions des uns et des autres, ainsi que de vérifier la pertinence des moyens techniques mis en oeuvre, et de mesurer l'efficacité de ces dits moyens.

Or, on ne dispose à ce jour d'aucun outil véritablement efficace pour sélectionner et mettre en oeuvre des moyens techniques et des modes d'action de nettoyage qui permettent de satisfaire les besoins des citoyens, c'est-à-dire qui leur permettent de juger que la qualité environnementale du lieu qu'ils fréquentent est acceptable.

L'objet de la présente invention se propose en conséquence de porter remède aux inconvénients de l'art antérieur, et en particulier de proposer un nouveau procédé d'optimisation de la qualité environnementale d'un lieu, qui permette d'obtenir un niveau de qualité environnementale satisfaisant aux yeux des personnes concernées par la fréquentation de ce lieu.

Un autre objet de l'invention vise à proposer un nouveau procédé d'optimisation de la qualité environnementale d'un lieu permettant d'évaluer précisément la nécessité de déclencher des actions correctives d'amélioration de la qualité environnementale.

Un autre objet de l'invention vise à proposer un nouveau procédé d'optimisation de la qualité environnementale d'un lieu particulièrement simple et rapide à mettre en oeuvre.

Un autre objet de l'invention vise à proposer un nouveau procédé d'optimisation de la qualité environnementale d'un lieu permettant de déterminer finement et rapidement la nature des moyens techniques à mettre en oeuvre pour améliorer la qualité environnementale dudit lieu.

Un autre objet de l'invention vise à proposer un nouveau procédé d'optimisation de la qualité environnementale d'un lieu présentant un caractère universel.

Un autre objet de l'invention vise à proposer un nouveau système d'optimisation de la qualité environnementale d'un lieu de conception particulièrement simple et ergonomique.

Un autre objet de l'invention vise à proposer un nouveau formulaire permettant une mise en oeuvre simple, ergonomique et peu onéreuse du procédé conforme à l'invention.

Les objets assignés à l'invention sont atteints à l'aide d'un procédé d'optimisation de la qualité environnementale d'un lieu susceptible d'être affligé par diverses anomalies environnementales potentielles, caractérisé en ce que ledit procédé comprend :

a) une étape de création d'un système référentiel dans laquelle on pondère d'un coefficient d'importance chaque anomalie potentielle, sur la base d'informations relatives à la perception de la qualité environnementale dudit lieu ;

b) une étape d'audit du lieu, dans laquelle :

$b_1$) on attribue à chaque anomalie une note représentative de son degré d'affliction du lieu à l'instant de l'audit ;

$b_2$) on pondère les notes par les coefficients d'importance pour obtenir des notes pondérées, et on établit au moins un indice qualité à partir des notes pondérées,

c) une étape d'action corrective, dans laquelle on agit sur le lieu à l'aide de moyens appropriés d'amélioration de la qualité environnementale, si ledit au moins un indice qualité est en dehors d'une plage de valeurs prédéterminée correspondante, représentative d'une qualité environnementale acceptable.

Les objets assignés à l'invention sont également atteints à l'aide d'un système de mise en oeuvre d'un procédé conforme à l'invention caractérisé en ce qu'il comprend au moins d'une part un moyen portable de saisie permettant de saisir, au cours de l'étape $b_1$), lesdites notes et, d'autre part, un moyen de traitement et d'analyse relié fonctionnellement, de manière temporaire ou non, au moyen portable de saisie et étant agencé pour établir le au moins un indice qualité.

Les objets assignés à l'invention sont enfin atteints à l'aide d'un formulaire destiné à la mise en oeuvre du procédé conforme à l'une des revendications 15 à 25 lorsqu'elles dépendent de la revendication 15.

D'autres objets et avantages particuliers de l'invention apparaîtront plus en détails à la lecture de la description qui suit.

L'invention concerne un procédé d'optimisation de la qualité environnementale d'un lieu susceptible d'être affligé par diverses anomalies environnementales potentielles.

L'expression *« optimisation de la qualité environnementale »* désigne ici l'action de perfectionner, d'améliorer, de rétablir ou même de maintenir la qualité environnementale dudit lieu. Par *« qualité environnementale »,* on désigne l'ensemble des caractéristiques d'un lieu qui contribue à rendre la fréquentation de ce lieu sensiblement non déplaisante.

Le procédé selon l'invention concerne tout type de lieu. Le lieu peut ainsi faire partie d'une zone urbaine, d'une zone rurale, d'une zone commerciale ou encore d'une zone industrielle. A titre d'exemples purement illustratifs et non limitatifs, le lieu peut être compris dans le groupe suivant : village, hameau, usine, gare, aéroport, aire de repos automobile, parties communes d'immeuble, base de loisirs, intérieur d'un véhicule, parc naturel, plage, piscine, montagne, hôtel, parc et/ou jardin privé.

Dans ce qui suit, on fera plus particulièrement référence, pour des raisons de concision de description, à un lieu faisant partie d'une zone urbaine, étant entendu que l'invention s'applique à tout type de lieu, c'est-à-dire d'endroits ou, en d'autres termes, d'espaces géographiques.

Par *« anomalie environnementale potentielle »,* on désigne ici tout événement ou élément susceptible de nuire à la qualité environnementale du lieu.

Dans l'exemple que l'on va développer ici, c'est-à-dire celui d'un lieu faisant partie d'une zone urbaine, les anomalies environnementales potentielles comprennent par exemple la présence de déchets dangereux ou de déjections canines sur le sol, la présence de graffitis ou de déjections de pigeons sur les murs, la présence de mégots de cigarettes dans les espaces verts, ou encore le dysfonctionnement de mobiliers urbains tels que les lampadaires ou les panneaux signalétiques. Les exemples précédents ne sont bien sûr donnés qu'à titre purement illustratif et non limitatif. Les anomalies environnementales potentielles peuvent notamment comprendre des dégradations du lieu d'ordre visuel, olfactif, auditif, tactile, fonctionnel voire psychologique.

Dans ce qui suit, pour des raisons de concision de description, on décrira uniquement un procédé d'optimisation de la qualité environnementale d'un lieu qui est un procédé de nettoyage ou de maintien à un niveau de propreté convenable d'un lieu. Dans ce cas, les anomalies environnementales potentielles sont relatives à la propreté du lieu.

Conformément à l'invention, le procédé comprend :

a) une étape de création d'un système référentiel ;

b) une étape d'audit du lieu ;

c) une étape d'action corrective.

Dans l'étape a) de création d'un système référentiel, on pondère d'un coefficient d'importance chaque anomalie potentielle, sur la base d'informations relatives à la perception de la qualité environnementale dudit lieu.

De manière préférentielle, pour un lieu donné, on effectue une liste des anomalies potentielles susceptibles d'affliger sa qualité environnementale. Ces anomalies pourront être par exemple, dans le cas où le lieu est une rue de circulation, la présence, sur les murs bordant la rue, de graffitis, d'affichage sauvage, de rideaux commerçants en mauvais état, de coulures d'urine, ainsi que de déjections de pigeons. A chacune de ces anomalies pouvant potentiellement affecter la qualité environnementale du lieu, qui est en l'occurrence une rue, est affecté un coefficient d'importance, par exemple numérique.

Avantageusement, cette étape a) de création d'un système référentiel comprend une sous-étape $a_1$) dans laquelle on établit une hiérarchie des anomalies potentielles du point de vue de l'impact perçu sur la qualité environnementale du lieu considéré.

Ainsi, dans l'exemple précédent, si l'on considère que l'ordre donné de la liste des anomalies citées correspond à cette hiérarchie, cela signifie que les graffitis sont considérés comme un facteur important de souillure du lieu, tandis que les déjections de pigeons sont considérées comme d'importance moindre relativement à la propreté de la rue.

L'étape a) comprend avantageusement une sous-étape $a_2$) dans laquelle on affecte à chaque anomalie potentielle un coefficient d'importance qui est fonction de son rang dans ladite hiérarchie.

De manière préférentielle, le coefficient d'importance est un nombre choisi de la façon suivante : plus l'impact environnemental perçu de l'anomalie potentielle considérée est important, plus le coefficient est élevé.

Ainsi, dans l'exemple précédent, on affectera un nombre plus élevé aux graffitis qu'aux déjections de pigeons.

De manière préférentielle, le coefficient d'importance peut être choisi parmi les nombres suivants : 0, 1, 2 ou 3.

Le coefficient 0 correspond à une anomalie dont l'impact est sensiblement nul et qui par conséquent ne doit pas être prise en compte.

Le coefficient 1 est attribué aux anomalies ressenties comme peu importantes. Le coefficient 2 est attribué aux anomalies ressenties comme importantes, tandis que le coefficient 3 est attribué aux anomalies susceptibles d'avoir un impact majeur ou capital sur la qualité environnementale du lieu.

Avantageusement, les informations relatives à la perception de la qualité environnementale du lieu, qui permettent d'attribuer les coefficients d'importance à chaque anomalie potentielle, sont obtenues en consultant des personnes susceptibles de fréquenter le lieu considéré.

Ces personnes peuvent être par exemple des résidents ou des riverains du lieu considéré, des commerçants, voire plus généralement des personnes que leur profession amène à fréquenter le lieu, ou encore des touristes. La consultation de ces personnes permet ainsi notamment de dégager la hiérarchie d'anomalies environnementales potentielles de l'étape a,).

De manière préférentielle, lesdites personnes sont consultées selon une méthode de sondage. Les techniques de sondage sont bien connues en tant que telles et ne seront donc pas décrites plus en détails ici. A titre d'exemple, on peut envisager que ce sondage se présente sous la forme d'une enquête au cours de laquelle on soumet à différentes personnes un questionnaire qui peut par exemple comprendre au moins les questions suivantes :

- Classer par ordre de priorité vos critères de propreté : propreté des murs, propreté des trottoirs, propreté du mobilier urbain, propreté des espaces verts, odeurs ;

- Quelle est l'importance des phénomènes suivants dans ce quartier : présence d'objets encombrants, déjections canines, affichage sauvage ;

- Quelles sont les priorités à traiter selon vous : présence d'objets encombrants, affichage sauvage, déjections canines.

Il est ainsi aisé, à partir d'une méthode quantitative pré-établie, d'attribuer les coefficients d'importance. On peut par exemple attribuer le coefficient 1 pour les anomalies potentielles auxquelles moins de 33% des personnes sondées sont sensibles. Le coefficient 2 peut être attribué aux anomalies potentielles auxquelles entre 33 et 66% des personnes sondées sont sensibles. Quant au coefficient 3, il peut être affecté aux anomalies potentielles auxquelles plus de 66% des personnes sondées sont sensibles.

Il est bien entendu tout à fait envisageable que plusieurs coefficients d'importance soient attribués à une même anomalie potentielle selon les heures de la journée, le type de personnes interrogées (résidents, commerçants, touristes), selon les tranches d'âge des personnes interrogées, ou encore selon le sexe des personnes interrogées.

Ainsi, la mise en oeuvre de l'étape a) permet d'évaluer et de quantifier l'impact potentiel de chaque anomalie potentielle sur la qualité environnementale d'un lieu. Cette démarche, du fait qu'elle est spécifique à chaque lieu, permet d'établir une hiérarchie d'anomalies qui sera différente d'un lieu à l'autre. On comprend notamment que les attentes, en matière de propreté, pour une population étudiante habitant un quartier de centre-ville ne sont vraisemblablement pas les mêmes que celles d'une population de retraités habitant un faubourg résidentiel.

L'étape a) permet ainsi de prendre en compte la spécificité de chaque lieu et de chaque population, ce qui permet *in fine* d'obtenir un résultat susceptible de satisfaire les personnes directement intéressées.

Dans l'étape b) du procédé conforme à l'invention, un audit du lieu est réalisé. Cet audit permet d'établir un constat à un instant donné du niveau de qualité environnementale du lieu considéré.

L'étape b) comprend une sous-étape $b_1$) dans laquelle on attribue à chaque anomalie une note représentative de son degré d'affliction du lieu à l'instant de l'audit.

Cette étape d'audit est, de manière préférentielle, réalisée par un auditeur, c'est-à-dire une personne en charge d'une mission d'évaluation et/ou de vérification, qui circule sur le lieu pour relever la présence d'éventuelles anomalies environnementales, et qui affecte à chacune de ces anomalies constatées une note, par exemple numérique, qui traduit l'importance de l'impact de l'anomalie considérée sur la qualité environnementale.

Le recours à une personne physique, faisant office d'auditeur, est donné cependant uniquement à titre d'exemple. Il est tout à fait envisageable, sans sortir du cadre de l'invention, que cette tâche soit menée à bien à l'aide d'un système automatisé pouvant consister par exemple en un automate muni de différents capteurs et capable de se déplacer, ou encore en un réseau de caméras, associé éventuellement à des moyens d'enregistrement, lesdites caméras pouvant être télécommandées.

Avantageusement, chaque note attribuée au cours de l'étape $b_1$) est un nombre choisi de la façon suivante : moins le degré d'affliction est acceptable, moins la note est élevée.

En d'autres termes, les anomalies qui génèrent les niveaux de dégradation du lieu les plus importants à l'instant de l'audit se verront attribuer un nombre supérieur à celui attribué aux anomalies générant des niveaux de dégradation moindre.

De façon préférentielle, chaque note attribuée est égale à:

- 1 si le degré d'affliction est jugé totalement acceptable, c'est-à-dire si la dégradation générée est considérée comme minime ;

- 0,5 si le degré d'affliction est jugé moyennement acceptable, c'est-à-dire si le niveau de dégradation est notable mais pas intolérable ;

- 0 si le degré d'affliction est jugé inacceptable, c'est-à-dire si les dégradations sont considérées comme intolérables.

En vue de mener à bien l'étape $b_1$), et notamment afin de quantifier les notions d'« *acceptable* », « *moyennement acceptable* », et *« inacceptable »,* il est préférable d'établir, avant ou pendant l'étape a), pour chaque anomalie potentielle ou du moins pour certaines d'entre elles, une échelle de référence correspondante d'appréciation du degré d'affliction de l'anomalie considérée.

En d'autres termes, on définit un référentiel qui permet de quantifier le niveau de dégradation associé à chaque anomalie relevée lors de l'audit.

De façon préférentielle, chaque échelle de référence est établie sur la base des informations relatives à la perception de la qualité environnementale du lieu utilisées dans l'étape a). Cela permet d'adopter un principe de notation proche des attentes des personnes susceptibles de fréquenter le lieu.

Avantageusement, chaque échelle de référence est subdivisée en trois classes, à savoir une classe correspondant à des degrés d'affliction totalement acceptables, une classe correspondant à des degrés d'affliction moyennement acceptables, et une classe correspondant à des degrés d'affliction inacceptables.

A titre d'exemple, l'échelle de référence peut comprendre des plages de nombres ou de fréquences d'occurrence de défauts, une note étant associée à chacune de ces plages. Ainsi, si l'on prend l'exemple de la présence de déjections canines dans un espace vert, on peut envisager que la présence de zéro à deux déjections canines est acceptable et correspond alors à une note de 1, tandis que la présence de trois à cinq déjections canines est jugée moyennement acceptable et justifie une note de 0,5, la présence de plus de cinq déjections canines étant jugée inacceptable et étant associée à une note de 0.

Les échelles de référence peuvent cependant ne pas uniquement être basées sur des critères d'occurrence mais peuvent comprendre tout type de moyen référentiel visuel, et/ou olfactif, et/ou auditif, et/ou tactile, et/ou psychologique.

Les échelles de référence peuvent également, sans pour autant que l'on sorte du cadre de l'invention, consister en un simple document descriptif.

L'utilisation d'échelles de référence n'est de toute manière pas nécessaire pour la mise en oeuvre du procédé conforme à l'invention. Il est ainsi tout à fait envisageable, pour l'attribution des notes lors de l'étape $b_1$), de s'en remettre au jugement d'auditeurs expérimentés et correctement formés.

Avantageusement, le procédé conforme à l'invention comprend une étape d'analyse du lieu, dans laquelle on répertorie au moins les principaux éléments constitutifs du lieu, ainsi qu'au moins les principales anomalies environnementales potentielles susceptibles d'affliger chacun desdits éléments.

Par exemple, si l'on considère un lieu qui est un espace vert, les principaux éléments constitutifs d'un tel lieu pourraient être :

- les sols et pelouses,

- les murs,

- les espaces pour chiens,

- le mobilier urbain,

- les jeux d'enfants,

- les espaces verts plantés.

Pour chacun de ces éléments constitutifs, on établit donc la liste des anomalies environnementales potentielles susceptibles de dégrader l'élément considéré. Par exemple, en ce qui concerne les murs, on pourra retenir les graffitis ou « *tags* », l'affichage sauvage, la détérioration de la signalétique, les coulures (urine), les déjections de pigeons ainsi que les gravures ou inscriptions.

De manière préférentielle, afin de faciliter et de systématiser l'étape d'audit b), le procédé conforme à l'invention comprend, préalablement à cette étape b), une étape d'établissement d'un formulaire d'audit, c'est-à-dire d'un document à renseigner fors de la mise en oeuvre de l'étape b).

Le formulaire d'audit peut se présenter sous tout type de format (papier, électronique, etc.).

Ledit formulaire comprend des rubriques. Chaque rubrique est associée à un élément constitutif du lieu, et comprend d'une part une liste d'anomalies environnementales potentielles susceptibles d'affliger l'élément constitutif correspondant et, d'autre part, des sections à renseigner associées à chacune desdites anomalies. Chaque section à renseigner, qui se présente par exemple sous la forme d'une zone vierge du document qu'il faut remplir, est destinée à accueillir une information relative à la note attribuée à l'anomalie environnementale considérée au cours de l'étape $b_1$).

L'invention vise d'ailleurs, de façon indépendante, un tel formulaire destiné à la mise en oeuvre du procédé conforme à l'invention.

Un exemple d'un formulaire conforme à l'invention est fourni ci-après. Cet exemple est relatif à un formulaire dédié à l'audit d'espaces verts.

## FORMULAIRE D'AUDIT
## ESPACES VERTS

| Contrôleur : | *Identifiant de l'auditeur* |
|---|---|
| Jour : | *Date de l'audit* |
| Heure Contrôle : | *Heure de l'audit* |

| INDICE QUALITE | | | |
|---|---|---|---|

| LES SOLS / ESPACE PELOUSE | I | C | M | NC |
|---|---|---|---|---|
| Déchets dangereux | 3 | *x* | | |
| Déjections canines | 3 | | *x* | . |
| Déchets solides | 2 | | *x* | |
| Déchets papiers | 2 | | | *x* |
| Déchets liquides | 2 | . | | *x* |
| Mégots | 1 | | | *x* |
| Odeur | 1 | | *x* | |
| TOTAL | 14 | *3* | *3* | *0* |
| INDICE QUALITE | *42,86 %* | | | |

| LE MOBILIER URBAIN | I | C | M | NC |
|---|---|---|---|---|
| Borne Information * | 3 | | | *x* |
| Corbeilles de propreté * | 3 | *x* | | |
| Lampadaires * | 2 | | *x* | |
| Bancs * | 2 | | | *x* |
| Barrières * | 1 | | | *x* |
| Œuvres d'art | 1 | *x* | | |
| TOTAL | 12 | *4* | *1* | *0* |
| INDICE QUALITE | *41,67 %* | | | |

\* Affichettes, tags, poubelles pleines

| LES MURS | I | C | M | NC |
|---|---|---|---|---|
| Tags | 3 | *x* | | |
| Affichage sauvage | 3 | *x* | | |
| Signalétique | 2 | *x* | | |
| Coulures (urine) | 1 | | *x* | |
| Déjections de pigeons | 1 | | | *x* |
| Gravures ou inscriptions | 1 | | | *x* |
| TOTAL | 11 | *8* | *0,5* | *0* |
| INDICE QUALITE | *77,27 %* | | | |

| JEUX D'ENFANTS | I | C | M | NC |
|---|---|---|---|---|
| Déchets sur sol souple | 3 | *x* | | |
| Déjections sur aire de jeux | 3 | | *x* | |
| Tags sur structure jeux | 2 | | *x* | |
| Poubelle pleine | 2 | | *x* | |
| Tags sur poubelle | 2 | | | *x* |
| TOTAL | 12 | *3* | *3,5* | *0* |
| INDICE QUALITE | *54,17 %* | | | |

| ESPACE POUR CHIENS | I | C | M | NC |
|---|---|---|---|---|
| Ramassage des déjections | 3 | *x* | | |
| Déchets | 3 | *x* | | |
| Structures métalliques : tag et affichage | 2 | *x* | | |
| Panneau d'information | 2 | | *x* | |
| Odeur | 1 | | | *x* |
| | | | | |
| TOTAL | 11 | *8* | *1* | *0* |
| INDICE QUALITE | *81,82 %* | | | |

| ESPACE VERT PLANTE | I | C | M | NC |
|---|---|---|---|---|
| Déchets solides | 3 | | | *x* |
| Déchets dangereux | 3 | *x* | | |
| Déchets papiers | 3 | *x* | | |
| Déjections canines | 2 | | *x* | |
| Bordure | 1 | | *x* | |
| Mégots | 1 | *x* | | |
| TOTAL | 13 | *7* | *1,5* | *0* |
| INDICE QUALITE | *65,38 %* | | | |

| Remarques : | *Observations diverses* |
|---|---|

| Echantillon audité : | *Eléments d'identification de l'espace vert* |
|---|---|

| Contraintes environnement | RT | RR | TC | EC |
|---|---|---|---|---|
| | | | | *x* |

**Légende :**

| I = | Coefficient d'importance | RT= Restauration en terrasse |
|---|---|---|
| C = | Conforme = 1 point | RR= Restauration rapide |
| M = | Moyen = 0,5 point | TC= Transports en commun |
| NC = | Non conforme = 0 point | EC= Ecole |

Dans cet exemple de formulaire, les informations dynamiques, c'est-à-dire les informations reportées dans les sections à renseigner ou issues d'un traitement effectué à partir du contenu des sections à renseigner, sont inscrites en caractères italiques soulignés.

Le formulaire donné en exemple comprend six rubriques correspondant respectivement aux éléments constitutifs de l'espace vert suivants:

-   sols/espace pelouse,

-   murs,

-   espace pour chiens,

-   mobilier urbain,

-   jeux d'enfants,

-   espace vert planté.

Pour chacune de ces rubriques sont listées en colonne des anomalies environnementales potentielles susceptibles de dégrader l'élément constitutif objet de la rubrique. Ainsi, en ce qui concerne les murs, il a été recensé, en tant qu'anomalies environnementales potentielles, les éléments suivants :

-   les *« tags »* (c'est-à-dire les graffitis),

-   l'affichage sauvage,

-   la signalétique dégradée,

-   les coulures (urine),

-   les déjections de pigeons,

-   les gravures ou inscriptions.

Sur chaque ligne correspondant à une anomalie environnementale sont positionnées quatre cases qui correspondent respectivement aux colonnes 1, C, M et NC.

Dans les cases correspondant à la colonne 1 sont rappelés les coefficients d'importance établis à l'issue de l'étape a).

Les cases correspondant aux colonnes C, M et NC font quant à elles partie des sections à renseigner. Les cases de la colonne C sont ainsi cochées ou activées lorsqu'on souhaite affecter une note égale à 1 à l'anomalie environnementale considérée, tandis que les cases de la colonne M sont cochées ou activées si l'on souhaite attribuer une note égale à 0,5 à l'anomalie environnementale considérée. Enfin, les cases de la colonne NC sont cochées ou activées si l'on souhaite affecter une note égale à 0 à l'anomalie environnementale considérée. Ainsi, en ce qui concerne la rubrique sols/espace pelouse du présent exemple, les déchets dangereux ont été jugés conformes, c'est-à-dire totalement acceptables et ont reçu à ce titre une note égale à 1. Les déjections canines, les déchets solides et les odeurs ont été jugés moyennement conformes, et ont donc reçu une note égale à 0,5. Enfin, les déchets papiers, les déchets liquides et les mégots ont été jugés non conformes, c'est-à-dire inacceptables, et ont été affectés par conséquent d'une note égale à 0.

Il est bien entendu tout à fait envisageable, au lieu d'utiliser des cases à cocher ou à activer correspondant à des notes, de mettre en oeuvre une seule section à renseigner dans laquelle on reporte directement la valeur de la note.

De façon préférentielle, le formulaire d'audit conforme à l'invention comprend également des sections à renseigner associées à l'identification de l'auditeur, à l'identification du lieu audité ainsi qu'à la date et à l'heure de mise en oeuvre de l'audit.

Avantageusement, il est également prévu des sections à renseigner dans lesquelles l'auditeur peut reporter des remarques ou observations qui pourraient contribuer à l'optimisation de la qualité environnementale du lieu considéré. Ces sections peuvent être *« libres »* (voir la zone *« remarques »* sur le formulaire donné en exemple) ou à propositions (voir la zone *« contraintes environnement »* sur le formulaire donné en exemple).

Les renseignements portés dans ces sections de remarques peuvent par exemple être pris en compte pour interpréter les résultats de l'audit, en tenant compte par exemple de la présence d'une école à proximité de l'espace vert audité ou d'un établissement de restauration rapide.

Une telle démarche de prise d'observations peut être d'ailleurs tout à fait dissociée de l'utilisation ou non d'un formulaire. Ainsi, de façon préférentielle, l'étape b) comprend une sous-étape $b_3$) dans laquelle on enregistre des observations qui permettent notamment d'améliorer le choix des moyens techniques mis en oeuvre dans l'étape c) et/ou d'interpréter les notes attribuées lors de l'étape $b_1$).

Avantageusement, le formulaire d'audit est implémenté sur un moyen informatique du genre ordinateur, et plus préférentiellement encore sur un ordinateur de poche (que l'on désigne également parfois par l'acronyme anglais PDA).

De manière préférentielle, on choisit un ordinateur de poche qui dispose d'un écran tactile. Ainsi, l'auditeur peut se déplacer au sein ou à proximité du lieu, par exemple dans un espace vert, et renseigner directement le formulaire en activant les cases de ce dernier sur l'écran de son ordinateur de poche.

Le procédé conforme à l'invention comprend également, postérieurement à l'étape $b_1$) ou sensiblement simultanément à cette dernière, une étape $b_2$) dans laquelle on pondère les notes affectées à chaque anomalie environnementale par les coefficients d'importance correspondants pour obtenir des notes pondérées.

Ainsi, dans l'exemple du formulaire « *espaces verts* » précédent, la note affectée à l'affichage sauvage des murs, qui est égale à 1, est pondérée par le coefficient d'importance affecté à l'affichage sauvage des murs, c'est-à-dire 3. Dans ce cas, la note pondérée est donc égale à 3, c'est-à-dire 3 fois 1.

Conformément à l'invention, on établit, au cours de l'étape $b_2$), au moins un indice qualité à partir des notes pondérées.

De façon préférentielle, le au moins un indice qualité est une moyenne pondérée, par exemple arithmétique, desdites notes pondérées, ou du moins de seulement de certaines de ces notes pondérées.

De manière préférentielle, les indices qualité suivants sont calculés

- des indices qualité partiels, correspondant à chaque élément constitutif du lieu, chacun de ces indices qualité étant une moyenne pondérée, par exemple arithmétique, des notes pondérées attribuées aux anomalies environnementales affligeant l'élément considéré ;
- et/ou un indice qualité total, correspondant à la moyenne pondérée des notes pondérées attribuées à l'ensemble des anomalies environnementales affligeant le lieu.

En d'autres termes, si l'on considère un élément j donné constitutif du lieu auquel sont associées m anomalies environnementales, à savoir l'anomalie 1, l'anomalie 2,..., l'anomalie m, des coefficients d'importance c, et des notes n, respectifs étant attribués à chacune de ces anomalies à l'issue de l'étape b), alors l'indice qualité partiel correspondant à l'élément constitutif j est calculé de la façon suivante : Indice qualité partiel pour l'élément j $= \dfrac{a_j}{b_j}$ où

$$a_j = \sum_{i=1}^{m} c_i \times n_i \text{ et } b_j = \sum_{i=1}^{m} c_i$$

Quant à l'indice qualité total, si l'on considère que le lieu comprend p éléments constitutifs j, il est calculé de la façon suivante :

$$\text{Indice qualité total pour le lieu} = \dfrac{\sum_{j=1}^{p} a_j}{\sum_{j=1}^{p} b_j}$$

Tel que cela est illustré dans l'exemple de formulaire *« espaces verts »* précédent, il est possible d'indiquer sur le formulaire l'indice qualité partiel pour chaque rubrique. Ainsi, l'indice qualité partiel concernant les murs est égal à 77,27%. Cet indice peut être reporté par l'auditeur sur le formulaire ou être calculé automatiquement, lorsque le formulaire est sous forme numérique, à partir des informations relatives aux notes attribuées par l'auditeur et d'un algorithme de traitement et de calcul.

Un code couleur peut également être associé à la valeur des indices qualité, afin d'en faciliter l'interprétation.

Ainsi, à l'issue de l'étape b), on dispose d'une information quantitative fine, fractionnable et hiérarchisé, relative au niveau de qualité environnementale constatée du lieu considéré.

Le (ou les) indice(s) qualité dont on dispose à l'issue de l'étape b) est (sont) alors comparé(s) à des plages de valeurs prédéterminées correspondantes, chacune de ces plages étant représentative d'une qualité environnementale acceptable.

Dans le cas où un indice qualité est en dehors de la plage de valeurs prédéterminées correspondante, alors on met en oeuvre une étape d'action corrective, dans laquelle on agit sur le lieu à l'aide de moyens physiques appropriés d'amélioration de la qualité environnementale.

La (ou les) plage(s) de valeurs prédéterminées représentative(s) d'une qualité environnementale acceptable est (sont) établie(s) de manière préférentielle à partir d'informations relatives à la perception de la qualité environnementale du lieu, et notamment à partir des informations qui ont été récoltées avant ou pendant l'étape a), par exemple par sondage.

Ces plages de valeurs prédéterminées définissent ainsi des niveaux de qualité minimum qui prennent en compte les attentes des personnes concernées, et en deçà desquels il est nécessaire d'intervenir à l'aide de moyens techniques, notamment de moyens de nettoyage, pour améliorer la qualité environnementale du lieu.

A titre d'exemple, on peut définir la plage représentative d'une qualité environnementale acceptable comme s'étendant de 66% à 100%. Dès lors, dans l'exemple correspondant au formulaire « *espaces verts* » mentionné précédemment, on constate que seuls les murs et l'espace pour chiens présentent une qualité environnementale acceptable, tandis que les sols/pelouses, le mobilier urbain, les jeux d'enfants ainsi que les espaces verts plantés sont en dessous du seuil d'acceptation, et nécessitent donc la mise en oeuvre d'une action corrective, en l'occurrence une action de nettoyage.

L'action corrective va ainsi consister par exemple à agir sur les anomalies affectant chaque élément constitutif du lieu dans le but d'améliorer l'indice qualité attribué audit élément constitutif.

Ainsi, le procédé conforme à l'invention permet d'agir finement sur le lieu puisqu'il prend en compte, de façon sélective, les différents éléments composant le lieu ainsi que les éventuels divers types de dégradation qui peuvent affecter les éléments constitutifs du lieu.

Cela permet la sélection et la mise en oeuvre, dans le cadre de l'étape c), de moyens et ressources techniques ciblés qui seront parfaitement adaptés à l'élément du lieu concerné, ainsi qu'aux types d'anomalie environnementale impliqués.

A titre d'exemple de moyens appropriés d'amélioration de la qualité environnementale, on peut citer les dispositifs de nettoyage tels que les véhicules munis de balais et/ou d'aspirateurs, les lances à eau, les balais, les détergents ou encore les bennes à ordures. On peut également citer des dispositifs à caractère préventif tels que des piques anti-pigeons, des poubelles publiques ou encore des revêtements anti-graffitis.

Les moyens d'amélioration de la qualité environnementale comprennent également tous les moyens et ressources techniques nécessaires à la remise en état des équipements publics tels que les lampadaires, les bancs, les barrières ou les jeux d'enfants.

Dans le cadre d'une mise en oeuvre simplifiée de l'invention, il est par ailleurs tout à fait envisageable de ne tenir compte que de l'indice qualité total du lieu afin de décider de lancer une action corrective, laquelle peut dans ce cas présenter un caractère standard, à défaut d'être ciblée sur certains éléments constitutifs du lieu ou sur certaines anomalies environnementales.

Avantageusement, les étapes du procédé conformes à l'invention, et notamment les étapes b) et c) sont réitérées, pour un même lieu, à intervalles réguliers dans le temps. Cela permet notamment d'effectuer un suivi du au moins un indice qualité dans le temps, de façon à piloter au mieux l'engagement des actions correctives, et de contrôler l'efficacité de ces dernières.

L'invention concerne également un procédé d'optimisation de la qualité environnementale d'un espace comprenant ou étant constitué de plusieurs lieux, dans lequel on met en oeuvre, pour chacun desdits lieux, les étapes a), b) et c).

L'espace comprenant plusieurs lieux peut lui-même faire partie d'un ensemble géographique plus vaste.

Il est ainsi envisageable, dans le cadre de l'optimisation de la qualité environnementale d'un tel ensemble géographique, de créer des formulaires d'audit types correspondant à des lieux élémentaires susceptibles de former un espace, plusieurs espaces formant l'ensemble géographique en question.

Dans le cas où l'ensemble géographique est une ville, l'espace peut être défini comme étant un quartier de ladite ville, tandis que les lieux sont des composantes élémentaires dudit quartier.

Dans ce cas, il est préférable de créer une série de formulaires élémentaires correspondant chacun à un type de lieu prédéfini.

Avantageusement, on établit un formulaire pour chacun des lieux compris dans le groupe suivant :

- avenue et/ou rue de circulation,

- place et/ou rue piétonne,
- traboule (c'est-à-dire passage intérieur d'immeuble, qui se rencontre principalement dans la région de Lyon, en France),
- espaces verts,
- jardin public,
- accès public.

Des exemplaires de ces formulaires peuvent par la suite être assemblés en une brochure de façon à former un formulaire global adapté à l'audit d'un quartier complet, ou d'un parcours urbain.

Ainsi, dans le cas où l'on souhaite optimiser la qualité environnementale d'un parcours comprenant une rue, suivie d'un espace vert, suivi d'une place elle-même suivie d'un jardin public, un formulaire de parcours sera créé qui sera constitué par la juxtaposition d'un formulaire de rue, d'un formulaire d'espace vert, d'un formulaire de place et d'un formulaire de jardin public. Cette juxtaposition pourra être effectuée de façon physique, en créant une brochure de documents en papier, ou de façon numérique, chaque formulaire apparaissant sur l'écran d'un ordinateur une fois que le formulaire précédent a été utilisé.

De telles dispositions permettent ainsi de mettre en oeuvre le procédé conforme à l'invention de façon particulièrement ergonomique et intuitive.

Avantageusement, le procédé conforme à l'invention est mis en oeuvre à l'aide d'un système qui comprend au moins un moyen portable de saisie permettant de saisir, directement ou indirectement, en temps réel ou de façon différée, les notes attribuées au cours de l'étape $b_1$).

De façon préférentielle, le formulaire d'audit correspondant au lieu à auditer est implémenté sur le moyen portable de saisie.

Le moyen portable de saisie peut consister en tout support de collecte et d'enregistrement d'informations connu à ce jour, et notamment en un support papier ou en un support électronique, à caractère informatique.

Le moyen portable de saisie peut également être constitué d'une caméra ou d'un appareil photographique, sans pour autant que l'on sorte du cadre de l'invention.

De façon avantageuse, le moyen portable de saisie est un ordinateur de poche (PDA) ainsi qu'on l'a déjà évoqué précédemment.

Avantageusement, le système de mise en oeuvre du procédé conforme à l'invention comprend également un moyen de traitement et d'analyse relié fonctionnellement, de manière temporaire ou non, au moyen portable de saisie. Ce moyen de traitement et d'analyse est agencé pour collecter et centraliser l'ensemble des données issues d'un ou plusieurs moyens portables de saisie (lorsque plusieurs audits sont réalisés par différents auditeurs, simultanément ou non). Ce moyen de traitement est également agencé pour effectuer des traitements, notamment statistiques et/ou cartographiques, des données issues des étapes a) et/ou b).

De façon avantageuse, ce moyen de traitement et d'analyse est un ordinateur.

Préférentiellement, l'ordinateur de poche et/ou l'ordinateur de traitement et d'analyse renferme et met en oeuvre un programme de gestion de la mise en oeuvre du procédé conforme à l'invention.

Ce programme peut notamment gérer :

- la création et/ou la modification de formulaires d'audit,

- l'assemblage de plusieurs formulaires pour créer une *« brochure »* correspondant à un parcours donné formé de plusieurs lieux,

- le calcul des indices qualité,

- le traitement des indices qualité et/ou des notes (envoi automatique d'ordres de lancement d'action corrective, établissement d'historiques et d'histogrammes, courbes comparatives...).

A titre d'exemple de résultats de traitements qui peuvent être effectués dans le cadre de l'invention, on peut citer l'établissement de fiches de non-conformités et de fiches de parcours sensiblement similaires aux exemplaires donnés ci-après.

## Fiches de parcours

Heures et date de l'audit
Nom de l'auditeur

**Q U A R T I E R ... ... ... ... ... ..**

**Note globale du parcours : .... %**

**Remarques** : (transférées depuis l'ordinateur de poche)
- remarque 1
- remarque 2
- remarque 3
- remarque x

Doivent figurer ici les éléments mentionnés au moment des remarques (restauration terrasse, restauration rapide, transports en commun ou école).

**Remarques sur le parcours :** (à remplir par l'auditeur)
................................................................................................................
................................................................................................................

**Transmis au service concerné pour action corrective le**............

**Prochain audit** : le ............ (à remplir par l'auditeur)

## Fiche de non-conformités

Heures et date de l'audit
Nom de l'auditeur

Début ……. Fin ………

**Les Sols**

Indice qualité des sols …… %

**Les Murs**

Indice qualité des murs ….. %

**Le Mobilier Urbain**

Indice qualité du mobilier urbain …. %

**Les Espaces Verts**

Indice de qualité des espaces verts …. %

**Remarques :** (transférées depuis l'ordinateur de poche)
-   remarque 1
-   remarque 2
-   remarque x

**Liste des non conformités observées :**
-   …………………………………
-   …………………………………

**Transmis au service concerné pour action corrective le**……….

**Prochain audit :** le ………… (à remplir par l'auditeur)

De telles fiches permettent ainsi d'affiner la fréquence des actions correctives et le choix des moyens techniques qui leur sont associés.

De façon préférentielle, le moyen portable de saisie est capable de communiquer à distance avec les instances responsables de la mise en oeuvre des actions correctives, de préférence par l'intermédiaire d'une liaison sans fil.

Cela permet d'envoyer d'éventuels ordres d'actions correctives immédiatement (et éventuellement automatiquement) à l'issue de l'audit mené lors de l'étape b).

Le procédé conforme à l'invention, ainsi que les outils qui lui sont associés, permet ainsi une amélioration durable, prédictible et contrôlée de la qualité environnementale d'un lieu.

## Revendications

1.  Procédé d'optimisation de la qualité environnementale d'un lieu susceptible d'être affligé par diverses anomalies environnementales potentielles, **caractérisé en ce que** ledit procédé comprend :

    a) une étape de création d'un système référentiel dans laquelle on pondère d'un coefficient d'importance chaque anomalie potentielle, sur la base d'informations relatives à la perception de la qualité environnementale dudit lieu ;

    b) une étape d'audit du lieu, dans laquelle :

    $b_1$) on attribue à chaque anomalie une note représentative de son degré d'affliction du lieu à l'instant de l'audit ;

    $b_2$) on pondère les notes par les coefficients d'importance pour obtenir des notes pondérées, et on établit au moins un indice qualité à partir des notes pondérées,

    c) une étape d'action corrective, dans laquelle on agit sur le lieu à l'aide de moyens appropriés d'amélioration de la qualité environnementale, si ledit au moins un indice qualité est en dehors d'une plage de valeurs prédéterminée correspondante, représentative d'une qualité environnementale acceptable.

2.  Procédé selon la revendication 1 **caractérisé en ce que** l'étape a) comprend les sous-étapes suivantes :

    $a_1$) on établit une hiérarchie des anomalies potentielles du point de vue de l'impact perçu sur la qualité environnementale du lieu ;
    $a_2$) on affecte à chaque anomalie potentielle un coefficient d'importance qui est fonction de son rang dans ladite hiérarchie.

3.  Procédé selon la revendication 1 ou 2 **caractérisé en ce que** lesdites informations relatives à la perception de la qualité environnementale sont obtenues en consultant des personnes susceptibles de fréquenter le lieu.

4.  Procédé selon la revendication 3 **caractérisé en ce que** l'on consulte lesdites personnes selon une méthode de sondage.

5.  Procédé selon l'une des revendications 1 à 4 **caractérisé en ce que** le coefficient d'importance est un nombre choisi de la façon suivante : plus l'impact environnemental perçu de l'anomalie potentielle considérée est important, plus le coefficient est élevé.

6.  Procédé selon la revendication 5 **caractérisé en ce que** le coefficient d'importance peut être choisi dans le groupe suivant : 0, 1, 2, 3.

7.  Procédé selon l'une des revendications 1 à 6 **caractérisé en ce que** avant ou pendant l'étape a), on établit, pour chaque anomalie potentielle ou du moins pour certaines d'entre elles, une échelle de référence correspondante d'appréciation du degré d'affliction de l'anomalie considérée.

8.  Procédé selon la revendication 7 **caractérisé en ce que** chaque échelle est établie sur la base desdites informations relatives à la perception de la qualité environnementale dudit lieu.

9.  Procédé selon la revendication 7 ou 8 **caractérisé en ce que** chaque échelle est un moyen référentiel visuel, et/ou olfactif, et/ou auditif, et/ou tactile, et/ou psychologique et/ou est un document descriptif.

10. Procédé selon l'une des revendications 7 à 9 **caractérisé en ce que** chaque échelle de référence est subdivisée en trois classes, à savoir une classe correspondant à des degrés d'affliction totalement acceptables, une classe correspondant à des degrés d'affliction moyennement acceptables et une classe correspondant à des degrés d'affliction inacceptables.

11. Procédé selon l'une des revendications 7 à 10 **caractérisé en ce que** les échelles, ou du moins certaines d'entre elles, sont utilisées pour mener à bien l'étape $b_1$).

12. Procédé selon l'une des revendications 1 à 11 **caractérisé en ce que** chaque note attribuée lors de l'étape $b_1$) est un nombre choisi de la façon suivante : moins le degré d'affliction est acceptable, moins la note est élevée.

13. Procédé selon la revendication 12 **caractérisé en ce que** chaque note attribuée est égale à :

   ♦  1 si le degré d'affliction est jugé totalement acceptable ;

   ♦  0,5 si le degré d'affliction est jugé moyennement acceptable ;

   ♦  0 si le degré d'affliction est jugé inacceptable.

14. Procédé selon l'une des revendications 1 à 13 **caractérisé en ce qu'**il comprend une étape d'analyse du lieu, dans laquelle on répertorie au moins les principaux éléments constitutifs du lieu, ainsi qu'au moins les principales anomalies environnementales potentielles susceptibles d'affliger chacun desdits éléments.

15. Procédé selon la revendication 14 **caractérisé en ce qu'**il comprend, préalablement à l'étape b), une étape d'établissement d'au moins un formulaire d'audit, ledit au moins un formulaire comprenant des rubriques, chaque rubrique étant associée à un élément constitutif du lieu et comprenant d'une part une liste d'anomalies environnementales potentielles susceptibles d'affliger l'élément constitutif correspondant et, d'autre part, des sections à renseigner associées à chacune desdites anomalies, chaque section étant destinée à accueillir une information relative à la note attribuée, au cours de l'étape $b_1$), à l'anomalie environnementale considérée.

16. Procédé selon l'une des revendications 1 à 15 **caractérisé en ce que** le au moins un indice qualité est une moyenne pondérée desdites notes pondérées, ou de seulement certaines des notes pondérées.

17. Procédé selon les revendications 14 et 16 ou selon les revendications 15 et 16, **caractérisé en ce qu'**on calcule les indices qualité suivants :

   -  des indices qualité partiels, correspondant à chaque élément constitutif du lieu, chacun de ces indices qualité étant une moyenne pondérée des notes pondérées attribuées aux anomalies environnementales affligeant l'élément considéré ;

   -  et/ou un indice qualité total, correspondant à la moyenne pondérée des notes pondérées attribuées à l'ensemble des anomalies environnementales affligeant le lieu.

18. Procédé selon l'une des revendications 1 à 17 **caractérisé en ce que** l'étape b) comprend une sous-étape $b_3$), dans laquelle on enregistre des observations permettant d'améliorer le choix des moyens mis en oeuvre dans l'étape c) et/ou d'interpréter les notes attribuées lors de l'étape $b_1$).

19. Procédé selon l'une des revendications 1 à 18 **caractérisé en ce que** ladite plage de valeurs prédéterminée correspondante représentative d'une qualité environnementale acceptable est établie à partir desdites informations relatives à la perception de la qualité environnementale dudit lieu.

20. Procédé selon l'une des revendications 1 à 19 **caractérisé en ce qu'**on réitère les étapes b) et c) à intervalles réguliers dans le temps, de façon à effectuer un suivi du au moins un indice qualité dans le temps.

21. Procédé selon l'une des revendications 1 à 20 **caractérisé en ce que** le lieu fait partie d'une zone urbaine.

**22.** Procédé selon la revendication 21 **caractérisé en ce que** le lieu est compris dans le groupe suivant :

- avenue et/ou rue de circulation,
- place et/ou rue piétonne,
- traboule,
- espaces verts,
- jardin public,
- accès public.

**23.** Procédé selon l'une des revendications 1 à 20 **caractérisé en ce que** le lieu est compris dans le groupe suivant : village, hameau, usine, gare, aéroport, aire de repos automobile, parties communes d'immeuble, base de loisirs, intérieur d'un véhicule, parc naturel, plage, piscine, montagne, hôtel, parc et/ou jardin privé.

**24.** Procédé d'optimisation de la qualité environnementale d'un espace comprenant plusieurs lieux, dans lequel on met en oeuvre, pour chacun desdits lieux, un procédé conforme à l'une des revendications 1 à 23.

**25.** Procédé selon la revendication 24 **caractérisé en ce que** l'espace est un quartier urbain.

**26.** Système de mise en oeuvre d'un procédé conforme à l'une des revendications 1 à 25 **caractérisé en ce qu'**il comprend au moins un moyen portable de saisie permettant de saisir, au cours de l'étape $b_1$), lesdites notes.

**27.** Système selon la revendication 26 **caractérisé en ce qu'**il comprend un moyen de traitement et d'analyse qui est d'une part relié fonctionnellement, de manière temporaire ou non, au moyen portable de saisie et qui, d'autre part, est agencé pour effectuer des traitements des données issues des étapes a) et/ou b).

**28.** Système selon la revendication 27 **caractérisé en ce que** le moyen portable de saisie est un ordinateur de poche, tandis que le moyen de traitement est un ordinateur.

**29.** Système selon l'une des revendications 26 à 28 pour la mise en oeuvre du procédé conforme à l'une des revendications 15 à 25 lorsqu'elles dépendent de la revendication 15, **caractérisé en ce que** le formulaire d'audit est implémenté sur le moyen portable de saisie.

**30.** Formulaire destiné à la mise en oeuvre du procédé conforme à l'une des revendications 15 à 25 lorsqu'elles dépendent de la revendication 15.

# EP 1 457 902 A1

**Office européen**
**des brevets**

**DECLARATION**

qui selon la règle 45 de la Convention sur le brevet
européen est considerée, aux fins de la procédure ultérieure,
comme le rapport de la recherche européenne

**Numéro de la demande**

EP 03 00 5791

| | CLASSEMENT DE LA DEMANDE (Int.Cl.7) |
|---|---|
| La division de la recherche estime que la présente demande de brevet n'est pas conforme aux dispositions de la CBE au point qu'une recherche significative sur l'état de la technique ne peut être effectuée au regard de toutes les revendications<br><br>Raison : | G06F17/60 |

Les revendications concernent un objet exclu de la brevetabilité selon l' Art. 52(2) et (3) CBE. Etant donné que les revendications sont formulées de façon à revendiquer de tels objets ou leur réalisation technologique à l'aide de caractéristiques triviales, l'examinateur de recherche n'a pas pu définir de problème technique dont la solution pourrait éventuellement impliquer une activité inventive. Par conséquent il n'était pas possible d'effectuer une recherche significative sur l'état de la technique (Règle 45 CBE et Directives du CBE, Chapitre VIII, 1-6).

L'attention du déposant est attirée sur le fait que, suite à une déclaration conformément à la Règle 45 CBE, une recherche pourrait être effectuée pendant la phase d'examen, à condition que les problèmes ayant conduit à cette déclaration de non-recherche ou de recherche incomplète aient été résolus (voir Directives OEB C-VI, 8.5).

---
-----

| Lieu de la recherche | Date | Examinateur |
|---|---|---|
| LA HAYE | 20 octobre 2003 | De Smet, M |